Europäisches Patentamt

European Patent Office

Office européen des brevets

(11) Veröffentlichungsnummer: **0 092 641**
A1

## (12) EUROPÄISCHE PATENTANMELDUNG

(21) Anmeldenummer: 83100878.4

(22) Anmeldetag: 31.01.83

(51) Int. Cl.³: **A 01 B 15/14**
A 01 B 73/00, A 01 B 3/36

(30) Priorität: 24.04.82 DE 3215424

(43) Veröffentlichungstag der Anmeldung:
02.11.83 Patentblatt 83/44

(84) Benannte Vertragsstaaten:
AT FR GB IT

(71) Anmelder: Johann Gassner K.G.
Post Grosshelfendorf
D-8011 Göggenhofen(DE)

(72) Erfinder: Gassner, Benno
Haus Nr. 14c
D-8011 Göggenhofen(DE)

(74) Vertreter: Lamprecht, Helmut, Dipl.-Ing.
Corneliusstrasse 42
D-8000 München 5(DE)

(54) **Mehrschariger Frontanbaupflug.**

(57) Ein mehrschariger Frontanbaudrehpflug, dessen Pflugrahmen (16) in mindestens zwei gegeneinander zwischen einer Arbeitsstellung und einer die Baulänge des Pfluges wesentlich verkürzenden Transportstellung bewegbare Abschnitte (16a, 16b, 16c, 16d) unterteilt ist.

FIG.3

EP 0 092 641 A1

- 1 -

Johann Gaßner KG
8011 Göggenhofen

-----------------------------------------------------------

Mehrschariger Frontanbaupflug.

-----------------------------------------------------------

Die Erfindung betrifft einen mehrscharigen Frontanbaupflug mit einem die Pflugkörper und gegebenenfalls
ein Stützrad tragenden, über eine Anbauvorrichtung
mit einem Fahrzeug verbindbaren Pflugrahmen.

Frontanbaupflüge finden zunehmende Verbreitung, ihre
mehrscharige Ausführung ist jedoch insofern problematisch, als die in Fahrtrichtung gelegene Vorderkante
des Pfluges einen relativ großen Abstand vom Steuerrad des den Pflug tragenden Fahrzeugs einnimmt und
dadurch Schwierigkeiten beim Straßentransport entstehen, zumal beispielsweise in der Bundesrepublik Deutschland die Vorschrift besteht, daß diese Vorderkante
vom Steuerrad keinen größeren Abstand als etwa 3,50 m aufweisen darf. Wird dieser Abschritt überschritten, so ist eine Sondergenehmigung erforderlich, doch auch mit einer solchen Sondergenehmigung darf der vorgeschriebene Abstand nicht wesentlich überschritten werden.

Der Erfindung liegt die Aufgabe zugrunde, eine Lösung dieses Problems zu schaffen und einen Frontanbaupflug derart auszubilden, daß er mit einer der Auslegung des Fahrzeugs entsprechenden Anzahl von Pflugscharen ausgerüstet werden kann und daß dennoch für den Transport die zulässigen und der Verkehrssicherheit dienenden Abmessungen nicht überschritten werden.

Die Lösung dieser Aufgabe besteht darin, daß der Pflugrahmen in mindestens zwei relativ zueinander zwischen einer Arbeitsstellung und einer Transportstellung verstellbare und in beiden Stellungen festlegbare Abschnitte unterteilt ist, wobei eine vorteilhafte Ausgestaltung darin besteht, daß der der Anbauvorrichtung benachbarte Abschnitt in Arbeitsstellung des Pflugrahmens um eine etwa vertikal verlaufende Achse in eine um etwa 90$^{\circ}$ gegenüber der Fahrtrichtung abgewinkelte Stellung verschwenkbar und in dieser Stellung um eine etwa in Fahrtrichtung verlaufende horizontale Achse gegenüber der Anbauvorrichtung um etwa 90$^{\circ}$ nach oben verschwenkbar ist.

Durch die Unterteilung des Pflugrahmens in mehrere Abschnitte kann der Pflugrahmen durch Überführung

0092641

- 3 -

dieser Abschnitte in ihre Transportstellung verkürzt werden, damit während des Transports auch die Breite möglichst gering gehalten werden kann, wird gemäß der vorteilhaften, vorstehend erwähnten Ausgestaltung der Pflugrahmen um 90° nach oben geschwenkt, so daß die zunächst nach der Seite ragenden Rahmenteile gegen die Fahrzeugmitte verschwenkt werden und statt nach der Seite nach oben ragen.

Hier und in der nachfolgenden Beschreibung wird unterschieden zwischen der Arbeits- und Transportstellung der Pflugrahmenabschnitt einerseits und der Arbeits- und Transportstellung des Pflugrahmens andererseits.

Als Arbeitsstellung des Pflugrahmens wird jene Stellung verstanden, in welcher die Pflugschare zum Ziehen von Furchen abgesenkt werden können, während als Transportstellung bei Drehpflügen eine Stellung bezeichnet wird, in welcher sich die Pflugschare der Pflugscharpaare in horizontaler Richtung beiderseits der Drehachse gegenüberliegen. Für die Pflugrahmenabschnitte wird dagegen unabhängig von der Position des Pflugrahmens als Arbeitsstellung jene Stellung bezeichnet, in welcher sie bezogen auf die benachbarten Pflugrahmenabschnitte eine arbeitsbereite Lage einnehmen, während als Transportstellung eine Position bezeichnet wird, in welcher die Pflugrahmenabschnitte zur Verkürzung der Gesamtlänge des Pfluges den benachbarten Abschnitten angenähert worden sind, selbst wenn sich der Pflugrahmen insgesamt noch in Arbeitsstellung befindet.

0092641

- 4 -

Weitere vorteilhafte Ausgestaltungen ergeben sich aus den Unteransprüchen in Verbindung mit der Beschreibung.

Anhand der nun folgenden Beschreibung der in der Zeichnung dargestellten Ausführungsbeispiele der Erfindung wird diese näher erläutert.

Es zeigt:

Fig. 1    die schematische Seitenansicht eines Frontanbaudrehpflugs in Arbeitsstellung des Pflugrahmens, jedoch aus dem Boden ausgehoben,

Fig. 2    eine Seitenansicht entsprechend Fig. 1, wobei der Pflugrahmen in die Transportstellung überführt ist, die Pflugrahmenabschnitte sich aber noch in Arbeitsstellung befinden, wobei die die vordere Pflugschargruppe weggelassen ist,

Fig. 3    eine den Fig. 1 und 2 entsprechende Seitenansicht, wobei die Pflugrahmenabschnitte aus der in Fig. 2 gezeigten Arbeitsstellung in die Transportstellung überführt worden sind,

Fig. 4    eine gegenüber den Fig. 1-3 vergrößerte Seitenansicht einer anderen Ausführungsform des Pfluges mit dem Pflugrahmen und den Pflugrrahmenabschnitten in Arbeitsstellung,

Fig. 5    eine Draufsicht auf den in Fig. 4 gezeigten Pflug, mit fehlender oberer Pflugschargruppe,

Fig. 6    eine der Fig. 5 entsprechende Draufsicht, wobei der Endabschnitt des Pflugrahmens sich in einer Zwischenstellung bei der Überführung in seine Transportstellung befindet,

Fig. 7    eine den Fig. 5 und 6 entsprechende Draufsicht mit vollständig in die Transportstellung überführten Pflugrahmenabschnitten,

Fig. 8    eine der Fig. 5 entsprechende Draufsicht auf eine weitere Ausführungsform.

Fig. 9    eine Draufsicht auf die Ausführungsform gem. Fig. 8 mit vollständig in die Transportstellung überführten Pflugrahmenabschnitten,

Fig. 10   eine der Fig. 4 entsprechende Seitenansicht noch einer anderen Ausführungsform in Arbeitsstellung von Pflug und Pflugrahmenabschnitten und

Fig. 11   eine der Fig. 10 entsprechende Seitenansicht, wobei die Pflugrahmenabschnitte nun in ihre Transportstellung überführt sind.

In der nachfolgenden Beschreibung werden gleiche oder einander entsprechende Teile der unterschiedlichen Ausführungsformen mit gleichen Bezugszeichen gekennzeichnet.

An einem Schlepper 10 ist mittels einer an sich bekannten und deshalb nur schematisch dargestellten Anbauvorrichtung 12 ein Frontanbaudrehpflug 14 heb- und senkbar befestigt. Die Erfindung wird zwar nachfolgend am Beispiel von Drehpflügen erläutert, sie ist in ihrer Anwendbarkeit aber keineswegs auf Drehpflüge beschränkt.

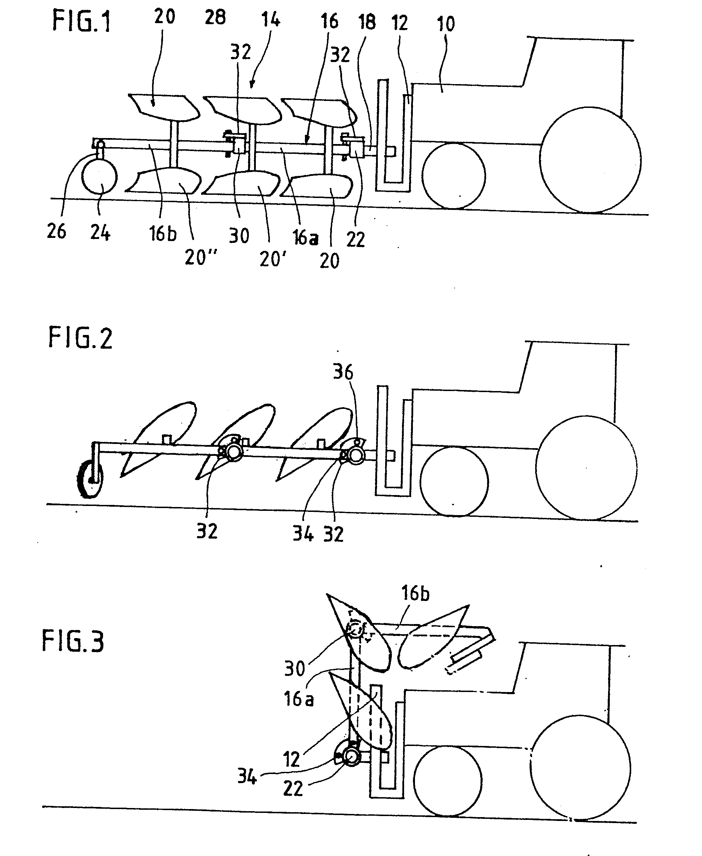

Der Pflug 14 besitzt einen Pflugrahmen 16, der durch ein in der Anbauvorrichtung 12 angeordnetes Drehlager 18 mit horizontaler, etwa in Fahrtrichtung des Schleppers 10 verlaufender Achse zwischen seinen beiden Arbeitsstellungen bewegbar ist, in denen die in Fig. 1 untere Gruppe von Pflugscharen 20 oder die andere Pflugschargruppe eingesetzt werden kann. Zwischen den beiden Arbeitsstellungen des Pflugrahmens 16 befindet sich die in Fig. 2 gezeigte Transportstellung des Pflugrahmens 16.

Auf der vom Schlepper 10 abgewandten Seite der Anbauvorrichtung 12 ist ein Schwenklager 22 angeordnet, dessen Achse in der in Fig. 2 gezeigten Transportstellung des Pflugrahmens 16 horizontal und quer zur Fahrtrichtung verläuft.

Am vorderen Ende des Pflugrahmens ist ein Stützrad 24 um eine in Arbeitsstellung des Pflugrahmens 16 horizontale und rechtwinklig zur Furchenrichtung der Pflugschare 20 verlaufende Achse verschwenkbar mittels eines Stützradarms 26 gelagert.

Die Pflugschare 20 sind paarweise durch Halter 28 mit dem Pflugrahmen 16 verbunden.

Wie am besten aus Fig. 2 ersichtlich ist, ist der Pflugrahmen 16 bei dem in den Fig. 1-3 dargestellten Beispiel durch ein Knicklager 30 mit zur Achse des Schwenklagers 22 paralleler Achse in zwei Abschnitte 16a und 16b unterteilt, von welchen der nächst dem Schlepper 10 gelegene Abschnitt 16a zwei Pflugscharpaare 20 und 20' trägt, während der vordere Abschnitt 16b das Pflugscharpaar 20" und den Stützradarm 26 mit dem Stützrad 24 trägt. Um den Pflugrahmen 16 in der in Fig. 2 gezeigten gestreckten Stellung zu halten, in der die Pflugrahmenabschnitte 16a und 16b ihre Arbeitsstellung einnehmen, können beliebige Verriegelungsvorrichtungen eingesetzt werden, beispielsweise je eine Sektorenplatte 32 am einen der gegeneinander verschwenkbaren Teile mit zwei der gestreckten bzw. der abgewinkelten Stellung zugeordneten Bohrungen 34 und 36, denen am Pflugrahmenabschnitt 16a bzw. 16b eine Bohrung derart zugeordnet ist, daß durch einen Steckbolzen die jeweils eingenommene Position fixiert werden kann.

Soll die Baulänge des Pfluges 14 für den Transport verringert werden, so wird in der in Fig. 1 gezeigten Arbeitsstellung des ausgehobenen Pfluges 14 die Verriegelung zwischen den Pflugrahmenabschnitten 16a und 16b, sowie zwischen dem Pflugrahmenabschnitt 16a und dem das Drehlager 18 umfassenden Abschnitt 38 gelöst und diese Abschnitte werden derart gegeneinander verschwenkt, daß sie jeweils mit dem benachbarten Abschnitt einen Winkel von z.B. $90^{o}$ einschließen, worauf die Verriegelung wieder in wirksame Stellung gebracht wird. Durch Drehung des Pflugrahmens 16 im Drehlager 18 um $90^{o}$ werden die in ihrer Transportstellung befindlichen Pflugrahmenabschnitte 16a und 16b in die in Fig. 3 gezeigte Stellung überführt, wodurch sich ein vergleichsweise einfach zu manövrierendes Fahrzeug mit wesentlich verbesserter Schwerpunktslage und stark verkürzter Baulänge ergibt.

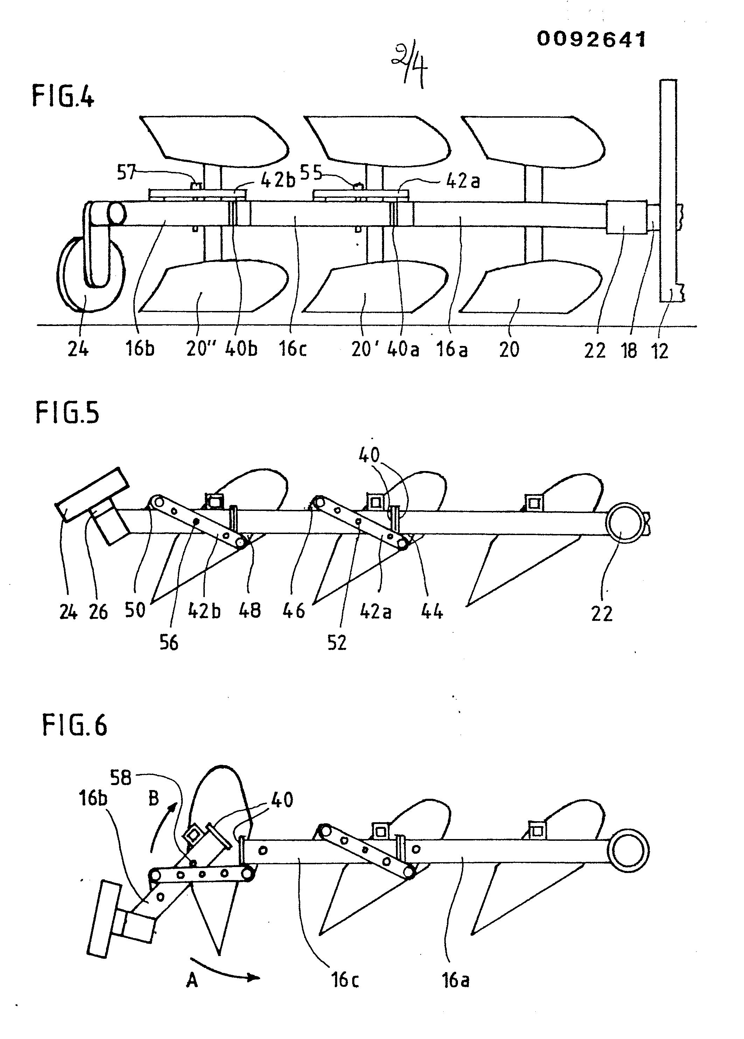

Bei der Ausführungsform nach den Fig. 4-7 ist der Pflugrahmen 16 im Anschluß an das Schwenklager 22 in drei Pflugrahmen abschnitte 16a, 16b und 16 c unterteilt, wobei jeder der Pflugrahmenabschnitte ein Pflugscharpaar 20, 20- und 20" trägt und am vorderen Abschnitt 16b wie beim vorher beschriebenen Beispiel noch das Stützrad 24 gelagert ist. Die Abschnitte sind an Trennstellen 40a und 40b vollständig voneinander getrennt, wobei in der gestreckten Lage Endplatten 40 durch gegenseitige plane Anlage die Ausrichtung des Rahmens 16 in der Arbeitsstellung der Pflugrahmenabschnitte 16a, 16b und 16c erleichtern. Zwischen den benachbarten Pflugrahmenabschnitten 16a und 16c bzw. 16c und 16b sind als Verbindungselemente Lenker 42 bzw. 42b angeordnet. Zum Anschluß der Lenker 42a und 42 b dienen seitlich an den Pflugrahmenabschnitten 16a, 16c und 16b angeordnete Lager 44, 46, 48 und 50 mit zur Achse des Schwenklagers 22 parallelen Achsen. An dem dem Schlepper 10 zunächst gelegenen Pflugrahmenabschnitt 16a ist das Lager 44 an dem vom Schlepper 10 abgewandten Ende angeordnet. Der dort gelagerte Lenker 42a überquert den anschließenden mittleren Pflugrahmenabschnitt 16c und ist an dem etwa in dessen Längsmitte angeordneten Lager 46 angeschlossen. Am vom Schlepper 10 abgewandten Ende des mittleren Pflugrahmenabschnitts 16c befindet sich auf der gleichen Rahmenseite wie das Lager 44 das Lager 48, an das der Lenker 42b angeschlossen ist, der den Rahmenendabschnitt 16b überquert und mit dem wieder etwa in dessen Längsmitte angeordneten Lager 50 verbunden ist.

Da die Lenker 42a und 42b jeweils einen der Pflugrahmenabschnitte 16c bzw. 16b überqueren, kann zur Sicherung der gestreckten Stellung des Pflugrahmens 16, in welcher sich die Pflugrahmenabschnitte 16a, 16b, 16c in ihrer Arbeitsstellung befinden, jeweils ein Sicherungsbolzen durch eine mittig angeordnete Bohrung 52 im Lenker 42a und eine zugeordnete Bohrung 54 im Pflugrahmenabschnitt 16c, bzw. durch eine mittige Bohrung 56 im Lenker 42b und eine zugeordnete Bohrung 58 im Pflugrahmenabschnitt 16b gesteckt werden. Die Bolzen sind mit 55 und 57 bezeichnet (Fig. 4).

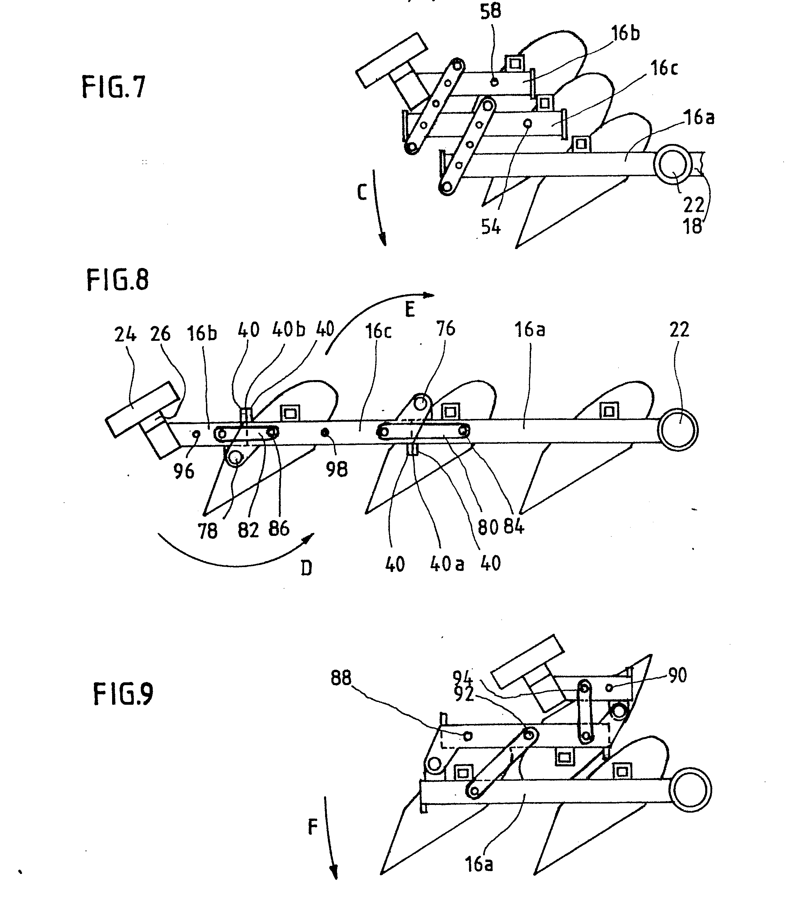

Soll der Pflug 14 in seiner Länge für den Transport verkürzt werden, wird zunächst der Bolzen aus den Bohrungen 56 und 58 entfernt, so daß der Lenker 42b gegenüber den Pflugrahmenabschnitten 16b und 16c verschwenkbar ist und zunächst in Richtung des Pfeils A in Fig. 6 bewegt wird, wodurch der Pflugrahmenabschnitt 16b vom Abschnitt 16c abgehoben wird. Anschließend wird der Lenker 42b mit dem Pflugrahmenabschnitt 16b in Richtung des Pfeils B in Fig. 6 verschwenkt, bis der Pflugrahmenabschnitt 16b in eine zum Abschnitt 16c parallele Lage gelangt, die aus Fig. 7 ersichtlich ist.

In ähnlicher Weise wird anschließend auch der Pflugrahmenabschnitt 16c aus seiner Arbeitsstellung in die in Fig. 7 gezeigte Transportstellung überführt, nachdem der Bolzen aus den Bohrungen 52 und 54 entfernt worden ist.

Wie die Fig. 7 zeigt, überqueren die Lenker 42a und 42b auch in der Transportstellung der Pflugrahmenabschnitte 16b und 16c die volle Breite der durch sie verbundenen Pflugrahmenabschnitte, so daß durch das Einstecken von Sicherungsbolzen in eine Bohrung 60 am Lenker 42a und eine zugeordnete Bohrung 62 im Pflugrahmenabschnitt 16a und in ein Bohrungspaar 64, 66 am Lenker 42a und am Pflugrahmenabschnitt 16c, sowie in ein Bohrungspaar 68, 70 am Lenker 42b und am Pflugrahmenabschnitt 16c und ein Bohrungspaar 72, 74 am Lenker 42b und am Pflugrahmenabschnitt 16b die in Fig. 7 gezeigte Transportstellung der Pflugrahmenabschnitte gesichret werden kann.

Nun kann der noch in Arbeitsstellung, d.h. mit vertikal übereinander angeordneten Pflugscharen 20 eines jeden Pflugscharpaares, befindliche Pflugrahmen 16 um die Schwenkachse 22 in Richtung des Pfeils C in Fig. 7 um etwa 90° seitlich ausgeschwenkt, in dieser Stellung durch eine geeignete Arretierung festgelegt und anschließend durch Drehung des Pflugrahmens 16 im Drehlager 18 (Fig. 1, Fig.4) in die Transportstellung überführt werden, in welcher der Plugrahmenabschnitt 16a dann dem Schlepper 10 benachbart etwa vertikal nach oben verläuft, wie dies ähnlich in Fig. 3 zu sehen ist, so daß diese Position, in welcher sich die Pflugrahmenteilstücke 16a-16c und der Pflugrahmen 16 insgesamt in Transportstellung befinden, hier nicht dargestellt ist.

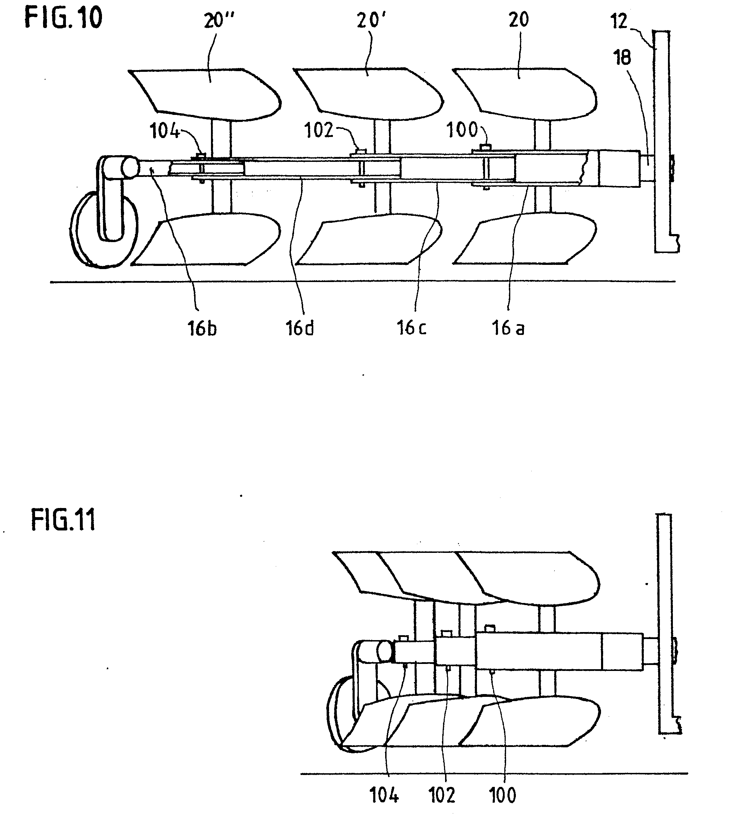

Eine weitere Variante zeigen die Fig. 8 und 9. Der Pflugrahmen ist ähnlich wie bei der Ausführungsform nach den Fig. 4-7 in drei Pflugrahmenabschnitte 16a, 16c und 16b unterteilt, wobei jedoch nun der dem Schlepper 10 zunächst gelegene Abschnitt 16a die zwei Pflugscharpaare 20 und 20' trägt, der mittlere Pflugrahmenabschnitt 16c das Pflugscharpaar 20" und der Endabschnitt 16b den Stützradarm 26 mit dem Stützrad 24.

Die benachbarten Pflugrahmenabschnitte sind durch seitlich angeordnete, auf entgegengesetzten Seiten des Pflugrahmens 16 angeordnete Scharniergelenke 76 und 78 mit zur Achse des Schwenklagers 22 parallelen Scharnierachsen miteinander verbunden. Die Trennstellen 40a und 40b werden von Laschen 80 bzw. 82 überbrückt. Die Lasche 80 ist am Pflugrahmenabschnitt 16a um eine Achse 84 verschwenkbar angebracht, die Lasche 82 am mittleren Pflugrahmenabschnitt 16c um eine Achse 86 verschwenkbar. Die Achsen 84 und 86 sind zu der Achse des Schwenklagers 22 parallel angeordnet. Die Pflugrahmenteilstücke 16c und 16b besitzen Bohrungen 88 bzw. 90, welche bei gestreckter Lage des Pflugrahmens 16 durch Bohrungen 92 bzw. 94 in den Laschen 80 bzw. 82 gesteckte Sicherungsbolzen aufnehmen.

- 12 -

Nach Entfernung der Sicherungsbolzen kann der Pflugrahmenabschnitt 16b in Richtung des Pfeils D in
Fig. 8 verschwenkt werden, bis das Stützrad 24 mit
dem Stützradarm 26 zwischen den Pflugscharpaaren 20"
und 20' liegt. Anschließend wird diese Position dadurch gesichert, daß die Bohrung 94 der Lasche 82
gegenüber einer Bohrung 96 im Pflugrahmenabschnitt
16b ausgerichtet und der Sicherungsbolzen wieder eingesteckt wird.

Nun wird der Pflugrahmenabschnitt 16c zusammen mit
dem Pflugrahmenabschnitt 16b in Richtung des Pfeils
E in Fig. 8 um ca. 180$^\circ$ verschwenkt, bis die in Fig.9
gezeigte Transportstellung der Pflugrahmenabschnitte
erreicht ist, worauf die Bohrung 90 der Lasche 82
gegenüber einer Bohrung 98 im Pflugrahmenabschnitt
16c ausgerichtet und der zugehörige Sicherungsbolzen
wieder eingesteckt wird.

Der Plugrahmen 16 kann nun wieder um die Schwenkachse
des Lagers 22 um etwa 90$^\circ$ zur Seite und schließlich
um das Drehlager 18 um etwa 90$^\circ$ nach oben verschwenkt
werden.

Bei der in den Fig. 10 und 11 gezeigten Ausführungsform ist der Pflugrahmen 16 in vier teleskopartig
gegeneinander bewegliche Abschnitte 16a, 16c, 16d und
16b unterteilt, von welchen der Pflugrahmenabschnitt
16a sich an das Schwenklager 22 anschließt, während der Endabschnitt 16b das Lager für den Stützradarm 26 trägt. In der Arbeitsstellung (Fig. 10) sind die Pflugrahmenabschnitte 16a - 16d durch in passende Bohrungen eingesteckte Sicherungsbolzen 100, 102 und 103 gesichert. Nach dem Lösen dieser Sicherungsbolzen können die Pflugrahmenabschnitte 16a - 16d in die in Fig. 11 gezeigte Stellung zusammengeschoben werden, in welcher die Bolzen wieder in passende Bohrungen eingesteckt werden können. Auch in diesem Fall läßt sich abschließend wieder der Pflugrahmen 16 mit den in ihre Transportstellung überführten Pflugrahmenabschnitten 16a - 16d um die Schwenkachse des Schwenklagers 22 zur Seite und schließlich mittels des Drehlagers 18 in eine vertikal nach oben verlaufende Position verschwenken.

Die beschriebenen Sicherungen mittels Bolzen und Bohrungen sind lediglich als Beispiel zu verstehen, so kann man etwa auch Sicherungselemente an den Endplatten 40 vorsehen.

- 1 -

0092641

## Ansprüche:

1. Mehrschariger Frontanbaupflug mit einem die Pflugkörper und gegebenenfalls ein Stützrad tragenden, über eine Anbauvorrichtung mit einem Fahrzeug verbindbaren Pflugrahmen, dadurch gekennzeichnet, daß der Pflugrahmen (16) in mindestens zwei gegeneinander zwischen einer Arbeitsstellung und einer Transportstellung bewegbare Abschnitte (16a, 16b, 16c, 16d) unterteilt ist.

2. Pflug nach Anspruch 1, dadurch gekennzeichnet, daß die Pflugrahmenabschnitte (16a-16d) in Richtung auf die Anbauvorrichtung (12) teleskopartig ineinanderschiebbar sind.

3. Pflug nach Anspruch 1, dadurch gekennzeichnet, daß der von zwei einander benachbarten Pflugrahmenabschnitten (16a, 16c; 16c, 16b) in Arbeitsstellung weiter von der Anbauvorrichtung (12) abgelegene Pflugrahmenabschnitt (16c; 16b) mit dem näher an der Anbauvorrichtung (12) gelegenen anderen Abschnitt (16a; 16c) durch einen Lenker (42a; 42b) verbunden ist, der um eine in Arbeitsstellung des Pflugrahmens (16) etwa vertikale Achse gelenkig mit beiden Pflugrahmenabschnitten (16a, 16c; 16c, 16b) verbunden und derart angeordnet ist, daß der abgelegene Abschnitt (16c; 16b) vom Lenker (42a; 42b) getragen in eine Transportstellung überführbar ist, in welcher er zumindest annähernd parallel zum anderen Pflugrahmenabschnitt (16a; 16c) und seitlich neben diesem angeordnet ist.

4. Pflug nach Anspruch 3, dadurch gekennzeichnet, daß der Lenker (42a, 42b) an dem anderen, näher an der Anbauvorrichtung (12) gelegenen Pflugrahmenabschnitt (16a; 16c) im Bereich des von der Anbauvorrichtung (12) abgelegenen Endes angelenkt ist.

5. Pflug nach einem der Ansprüche 3 oder 4, dadurch gekennzeichnet, daß die Achsen (44, 46; 48, 50) für die Verbindung des Lenkers (42a; 42b) mit dem Pflugrahmen (16) jeweils auf unterschiedlichen Seiten des Pflugrahmens (16) liegen.

6. Pflug nach Anspruch 5, dadurch gekennzeichnet, daß bei mehr als zwei Pflugrahmenabschnitten (16a, 16b, 16c) der jeweils in Bezug auf den benachbarten Abschnitt (16a; 16c) weiter von der Anbauvorrichtung abgewandten Pflugrahmenabschnitt (16c; 16b) gegenüber dem näher an der Anbauvorrichtung gelegenen Pflugrahmenabschnitt (16a; 16c) nach der gleichen Seite des Pflugrahmens (16) in die Transportstellung verlegbar ist.

7. Pflug nach Anspruch 1 mit einem Stützrad, welches an dem am weitesten von der Anbauvorrichtung (12) abgelegenen Pflugrahmenabschnitt (16b) angebracht ist, dadurch gekennzeichnet, daß der der Rahmen (16) in drei Abschnitte (16a, 16c, 16b) unterteilt ist, welche um in Arbeitsstellung des Pflugrahmens (16) etwa vertikale Achsen (76, 78) gegeneinander verschwenkbar sind, daß der das Stützrad (24) tragende Pflugrahmenabschnitt (16b) derart um annähernd 180$^{\circ}$

gegen den benachbarten Abschnitt (16c) in die Transportstellung verschwenkbar ist, daß in der Transportstellung das Stützrad (24) zwischen zwei benachbarten Pflugscharen (20', 20") angeordnet ist, daß der benachbarte Pflugrahmenabschnitt (16c) zumindest eine Pflugschar (20") oder im Falle eines Drehpflugs zumindest ein Pflugscharpaar trägt und gegenüber dem der Anbauvorrichtung (12) benachbarten Pflugrahmenabschnitt (16a) derart verschwenkbar ist, daß die Pflugschare bzw. Pflugscharpaare (20, 20', 20") des der Anbauvorrichtung (12) benachbarten Pflugrahmenabschnitts (16a) und der gegen ihn geschwenkten Pflugrahmenabschnitte (16c, 16b) jeweils in Längsrichtung des Pflugrahmens (16) gegeneinander versetzt angeordnet sind.

8. Pflug nach Anspruch 1, dadurch gekennzeichnet, daß der Pflugrahmen (16) um eine in Arbeitsrichtung verlaufende, horizontale Achse (18) drehbar an der Anbauvorrichtung (12) gelagert und gegenüber der Anbauvorrichtung (12) um eine in Arbeitsstellung des Pflugrahmens (16) vertikale Achse (22) gegenüber der Anbauvorrichtung (12) verschwenkbar ist und daß der Pflugrahmen durch eine in Arbeitsstellung des Pflugrahmens (16) vertikale Achse (30) in zwei Pflugrahmenabschnitte (16a, 16b) unterteilt ist, deren Länge so bemessen ist, daß der von der Anbauvorrichtung (12) abgelegene Pflugrahmenabschnitt (16b) sich oberhalb des Schleppers (10) befindet, wenn die beiden Pflugrahmenabschnitte einen Winkel von etwa 90$^{\circ}$ mit-

- 4 -

einander einschließen, der in Arbeitsstellung befindliche Pflugrahmen (16) gegenüber der Anbauvorrichtung (12) um etwa $90^{o}$ zur Arbeitsrichtung verschwenkt und der Pflugrahmen (16) aus der Arbeitsstellung um die in Arbeitsrichtung verlaufende Achse (18) um etwa $90^{o}$ in seine Transportstellung verschwenkt ist.

FIG.1

FIG.2

FIG.3

FIG.4

57  42b 55  42a

24  16b  20″ 40b  16c  20′ 40a  16a  20  22 18 12

FIG.5

40

24 26  50  42b  48  46  42a  44  22

56  52

FIG.6

58  40

16b  B

A  16c  16a

0092641

3/4

FIG.7

FIG.8

FIG.9

FIG.10

20''     20'     20     12

18

104     102     100

16b     16d     16c     16 a

FIG.11

104   102   100

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 019 275 (STEIGERWALD) * Seite 37, Zeilen 1-38; Seite 38, Zeilen 1-30; Figuren 28-30 * | 1,8 | A 01 B 15/14 A 01 B 73/00 A 01 B 3/36 |
| | --- | | |
| X | FR-A-2 504 347 (COMPAGNIE FRANCAISE DE MACHINES AGRICOLES) * Seite 4, Zeilen 17-37; Seite 5, Zeilen 1-35; Seite 6, Zeilen 1-9; Figuren 1-3 * | 1 | |
| | --- | | |
| A | FR-A-2 393 718 (KVERNELDAND A/S.) * Seite 3, Zeilen 8-13; Figur 1 * | 1 | |
| | --- | | |
| A | US-A-4 171 726 (WARD) | | |
| | --- | | RECHERCHIERTE SACHGEBIETE (Int. Cl. ³) |
| A | FR-A-2 175 864 (OY W. ROSENLEW AB.) | | |
| | --- | | A 01 B |
| A | FR-A-1 595 642 (GERVAISE) | | |
| | --- | | |
| A | DE-B-1 216 597 (BAYERISCHE PFLUGFABRIK) | | |
| | --- | | |
| A | EP-A-0 045 030 (GASSNER) | | |
| | ----- | | |

Der vorliegende Recherchenbericht wurde für alle Patentansprüche erstellt.

| Recherchenort DEN HAAG | Abschlußdatum der Recherche 01-07-1983 | Prüfer VERDOODT S.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82